# EUROPEAN PATENT APPLICATION

(11) **EP 3 608 795 A1**
(43) Date of publication of application: **12.02.2020**
(21) Application number: 19190194.1
(22) Date of filing: 06.08.2019
(51) Int. Cl.: G06F 16/901

(54) **METHOD AND APPARATUS FOR GENERATING KNOWLEDGE GRAPH, DEVICE AND COMPUTER READABLE STORAGE MEDIUM**

(30) Priority: 08.08.2018 CN 201810897535
(71) Applicant: Beijing Baidu Netcom Science and Technology Co., Ltd., Beijing 100085 (CN)
(72) Inventor: ZHANG, Ye, Beijing, 100085 (CN); ZHU, Ying, Beijing, 100085 (CN); CUI, Xuefei, Beijing, 100085 (CN); LIU, Xiaobo, Beijing, 100085 (CN); ZHAO, Chengyuan, Beijing, 100085 (CN)
(74) Representative: advotec.

(57) **Abstract**

Embodiments of the present disclosure provide a method (200) and an apparatus (800) for generating a knowledge graph, a device, and a computer readable storage medium. The method (200) includes: establishing (202) a graph database based on a set of entities and relationships among the entities in given content; receiving (204) a graph query for the given content from a user; and generating (206), based on the graph database, a knowledge graph of the given content by using a predefined formatted layout, the knowledge graph having a network structure. With the embodiments of the present disclosure, the knowledge graph of the given content may be automatically generated based on the established graph database. With the embodiments of the present disclosure, the knowledge graph is generated by using the formatted layout and has the network structure, which can improve presentation effect and then enhance user experience.

## Description

### FIELD

The present disclosure relates to a field of data visualization technology, and more particularly to a method and an apparatus for generating a knowledge graph, and an electronic device, and a computer readable storage medium.

### BACKGROUND

Data visualization refers to is a graphical representation of information or data that presents data in a visual form, such as charts, maps, graphs, etc., to help people understand meaning of the data. Data visualization may include static visualization and dynamic visualization. Static visualization means that dynamical modification cannot be performed after visualization, while dynamic visualization means that update or adjustment may be dynamically performed based on dynamic data.

Knowledge graph is a common form of representing data visualization. It is a semantic representation that reveals the relationship between entities, and it can visualize objects in real or virtual world and relationship between the objects. The knowledge graph is essentially a semantic network, and it is a graph-based data structure. The knowledge graph is mainly composed of nodes and edges. Nodes and edges can also have various settable properties. In the knowledge graph, each node can represent one entity in the real or virtual world, and each edge can represent a relationship between two entities.

### SUMMARY

Embodiments of the present disclosure provide a method and an apparatus for generating a knowledge graph, an electronic device and a computer readable storage medium.

The present disclosure is defined in the independent claims, and the preferable features according to the present disclosure are defined in the dependent claims.

According to a first aspect of the present disclosure, a method for generating a knowledge graph is provided. The method includes: establishing a graph database based on a set of entities and relationships among the entities in given content; receiving a graph query for the given content from a user; and generating, based on the graph database, a knowledge graph of the given content by using a predefined formatted layout, the knowledge graph having a network structure.

According to a second aspect of the present disclosure, an apparatus for generating a knowledge graph is provided. The apparatus includes: an establishing module, configured to establish a graph database based on a set of entities and relationships among the entities in given content; a receiving module, configured to receive a graph query for the given content from a user; and a generating module, configured to generate, based on the graph database, a knowledge graph of the given content by using a predefined formatted layout, the knowledge graph having a network structure.

According to a third aspect of the present disclosure, an electronic device is provided. The electronic device includes: one or more processors; and a memory device, configured to store one or more programs that, when executed by the one or more processors, cause the electronic device to perform the method or the process according to embodiments of the present disclosure.

According to a fourth aspect of the present disclosure, a computer readable storage medium is provided. The computer readable storage medium has computer programs stored thereon that, when executed by a processor, cause the processor to perform the method according to embodiments of the present disclosure.

It should be understood that, the content described in the summary of the present disclosure is not intended to limit the key features or important features of the embodiments of the present disclosure, and is not intended to limit the scope of the disclosure. Other features of the present disclosure will be readily understood by the following description.

### BRIEF DESCRIPTION OF THE DRAWINGS

Above and other features, advantages and aspects of embodiments of the present disclosure will become more apparent from the following descriptions made with reference to the drawings. In the drawings, the same or similar elements and the elements having same or similar functions are denoted by like reference numerals throughout the descriptions.
Fig. 1 is a schematic diagram illustrating an exemplary environment in which embodiments of the present disclosure may be implemented.
Fig. 2 is a flow chart illustrating a method for generating a knowledge graph according to an embodiment of the present disclosure.
Fig 3 is a schematic diagram illustrating an example graphical user interface (GUI) of a character graph generated according to an embodiment of the present disclosure.
Fig 4 is a schematic diagram illustrating an example GUI of an entire character graph for a certain TV play generated according to an embodiment of the present disclosure.
Fig 5 is a schematic diagram illustrating an example GUI including an area for recommending popular character graph according to an embodiment of the present disclosure.
Fig 6 is a schematic diagram illustrating an example GUI of a character graph with a switched central node according to an embodiment of the present disclosure.
Fig 7 is a schematic diagram illustrating an example GUI presenting character introduction according to an embodiment of the present disclosure.
Fig. 8 is a block diagram illustrating an apparatus for generating a knowledge graph according to an embodiment of the present disclosure.
Fig. 9 is a schematic diagram illustrating an electronic device according to a plurality of embodiments of the present disclosure.

### DETAILED DESCRIPTION

Embodiments of the present disclosure will be described in more detail below with reference to the accompanying drawings. Although certain embodiments of the present disclosure are shown in the drawings, it should be understood that the present disclosure may be implemented in various forms and should not be construed as limited to the embodiments set forth herein. In contrast, these embodiments are provided for a more complete understanding of the present disclosure. It should be understood that the drawings and embodiments of the present disclosure are for illustrative purposes only and are not intended to limit the scope of the disclosure.

In the description of the embodiments of the present disclosure, the term "comprise" and the like are to be understood as open contains, i.e., "including but not limited to". The term "based on" should be understood to mean "based at least in part". The term "one embodiment" or "an embodiment" should be understood to mean "at least one embodiment". Other explicit and implicit definitions may also be included below.

Inventors of the present disclosure noticed that there is a strong demand for knowledge graphs (such as relationships among TV play characters) during a search process of a user. In the related art, the user is mainly satisfied in a form of question-and-answer cards, lacking complete knowledge graph presentation. In the related art, there are two ways for generating a knowledge graph for given content (such as a TV play). A first way is manually editing a graph and presenting the graph as a picture. However, in this way, the graph is unable to be automatically updated by technical means. When content of the TV play is updated or new content is generated, re-editing the graph of this method is more costly with poor timeliness. A second way is generating a knowledge graph automatically. However, the graph generated in this way generally has a tree structure, which extends from one node and relationships between child nodes of this node cannot be presented. In addition, the graph generated by the second way usually has simplex edge relationships among characters, and cannot fully show the relationships among characters in the TV paly, thus its ideographical expression and effect are poor, and cannot meet the needs of user. Therefore, the ways of generating a graph in the related art is either inefficient or has poorly presentation effect, which cannot meet the needs of user.

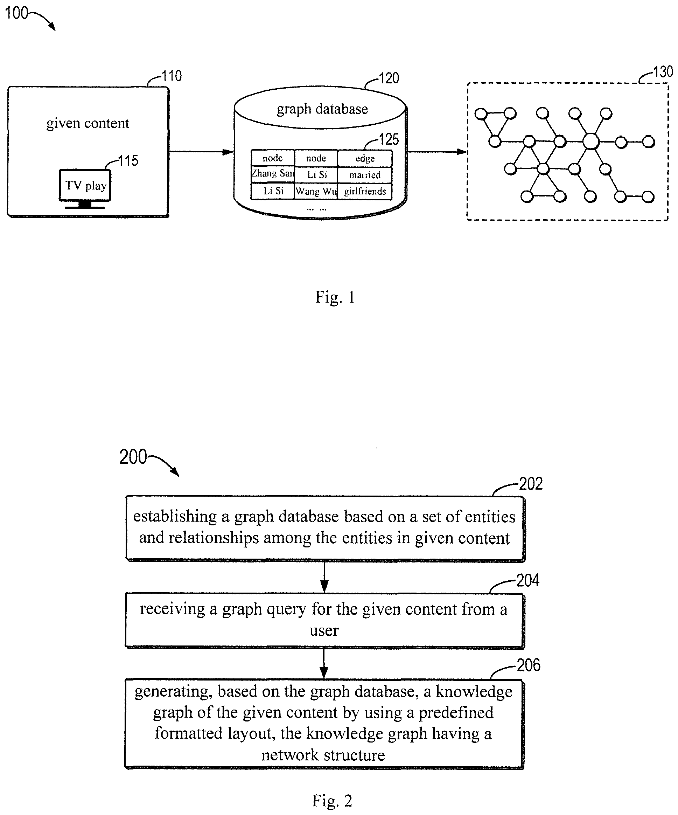

Embodiments of the present disclosure provide a solution for generating a knowledge graph. In embodiments of the present disclosure, a knowledge graph for given content may be automatically generated based on an established graph database. At the same time, the knowledge graph generated in embodiments of the present disclosure uses a formatted layout and is presented as a network structure, thus can improve presentation effect and further improve user experience. In the following, some embodiments of the present disclosure may be described in detail with reference to Figs 1 to 9.

Fig. 1 is a schematic diagram illustrating an exemplary environment 100 in which embodiments of the present disclosure may be implemented. In the exemplary environment 100, given content 110, a graph database 120 and a knowledge graph 130 are included. The given content 110 may be a variety of content that needs to be presented in a form of a knowledge graph. The given content 110 is generally a finite set. That is, a knowledge graph generated based on the given content has a limited size. In some embodiments, the given content 110 may be a film and television work, such as a TV play (a TV play 115), a film, a novel, a cartoon, and the like. In addition, the given content 110 may be set of enterprise information, a set of legal information, academic or teaching content, and the like.

The given content 110 (such as the TV play 115) may involve a lot of characters. There are intricate relationships among these characters. Based on analysis on the TV play 115, relatively important entities (such as key characters in the TV play) in the TV play 115 and relationships (such as character relationship in the TV play) among the entities may be extracted to establish the graph database 120. It should be understood that, in most scenes, only key characters and relationships among the key characters in the TV play need to be stored, however, all characters and relationships among the characters may be stored in the graph database 120. During a process of establishing the graph database 120, the characters may be taken as nodes in the graph database 120, and the relationships among the characters may be taken as edges in the graph database. As illustrated in Fig. 1, the graph database 120 includes a table 125. The table 125 stores the nodes (i.e., characters) and edges (character relationships) among the nodes. As illustrated in table 125, Zhang San and Li Si are married, and Li Si and Wang Wu are girlfriends.

As illustrated in Fig. 1, when or after a graph query for the given content 110 is received, the knowledge graph 130 may be generated based on the graph database 120. The knowledge graph 130 generated according to embodiments of the present disclosure uses a formatted layout and has a network structure, thus can improve presentation effect and further improve user experience. In the following, some exemplary implementations of generating the knowledge graph are illustrated with reference to Figs 2 to 8. After the knowledge graph 130 is generated, the generated knowledge graph 130 may be provided in a user equipment to the user locally or through network.

With embodiments of the present disclosure, the generated graph knowledge uses the network structure, thus there is no restriction on a level of entity relationship, which can cover the relationships among entities in the given content to a large extent, thus improving the integrity of the entity relationships in the given content.

Fig. 2 is a flow chart illustrating a method 200 for generating a knowledge graph according to an embodiment of the present disclosure.

At block 202, a graph database is established based on a set of entities and relationships among the entities in given content. That is, as illustrated in Fig. 1, based on main characters or key characters and relationships among these characters in the TV play, and taking the characters as nodes and taking the relationships among the characters as the edges, a character graph database is established. The edges in the graph database may be directed edges. A directed edge refers to a relationship from one node to another node. Therefore, depending on the relationship between two nodes, there may be a one-way edge, a two-way edge, or no edge between the two nodes. It should be understood that, although an exemplary implementation of an embodiment of the present disclosure uses a TV play or a film and television work as a descriptive example, the given content may also be other forms of target content.

At block 204, a graph query for the given content is received from a user. In some embodiments, a character graph query for a TV play may be received in a search engine. For example, when the user searches "ABC character graph" through the search engine, the search engine may understood "ABC character graph" as a character graph query for a TV play ABC. In an embodiment, a query request for the given content (such as a certain TV play) may be received in a specific graph website or an application. In some embodiments, the user may realize the graph query by inputting keywords. In addition, the user may express his graph query through a menu or a button.

At block 206, a knowledge graph of the given content is generated by using a predefined formatted layout based on the graph database, the knowledge graph having a network structure. For example, a layout template such as a template of honeycomb hexagon structure may be preset. Then nodes are projected to respective parts in the template, such that the generated knowledge graph locates at a predetermined on the template, thereby the regularity and aesthetics of the knowledge graph may be ensured, thus improving presentation effect and user experience. The formatted layout may refer to a regular layout having a predetermined format, which is different from traditional irregular layouts. The knowledge graph is generated based on the formatted layout, therefore, the nodes and edges in the knowledge graph are clear, and there is no cross-edge situation.

It should be understood that, the method according to embodiments of the present disclosure may be implemented in any electronic device (i.e., a server). After the knowledge graph is generated, the knowledge graph may be sent to the user equipment, so as to be displayed on the display screen of the user equipment. For example, the knowledge graph may be displayed in a browser of the user equipment, or may be displayed in an application installed on the user equipment. The user equipment may be any electronic device, including a fixed equipment such as a desk computer or a mobile device such as a smart phone, etc.

In some embodiments, the knowledge graph may be generated by using the honeycomb hexagon structure. Each hexagon may correspond to six edge nodes and one center node. In this way, it is possible to satisfy the association and extension between nodes, and to facilitate browsing by users, especially browsing on mobile devices with smaller screens. The entire character graph may visualize the character relationships of the whole TV play by taking a character as a center node and extending outward from the center node to connect other nodes. In an embodiment, an octagon or other structures may be used for generating the knowledge graph.

In some embodiments, the graph database may store all or most part of relationships among entities, and each relationship has a relative weight depending on a type of the relationship. For example, a weight of marital relationship is greater than a weight of friend relationship. When generating the knowledge graph, only a part of the relationship with relatively high weight can be presented. For example, the character relationships may be ranked, and a top number of the relationship edges are presented based on the rank result. That is, the knowledge graph may only present relatively important relationships stored in the graph database, so that the generated knowledge graph is not too rich to affect the user's experience.

In some embodiments, when the given content is updated, the graph database may be updated correspondingly. When a new graph query for the given content is received, an updated knowledge graph may be generated based on the updated graph database. In this way, through the online call of data, online display of the knowledge graph can be updated synchronously, which greatly reduces the manual editing cost, thus can complete batch update of a large number of knowledge graphs at the same time.

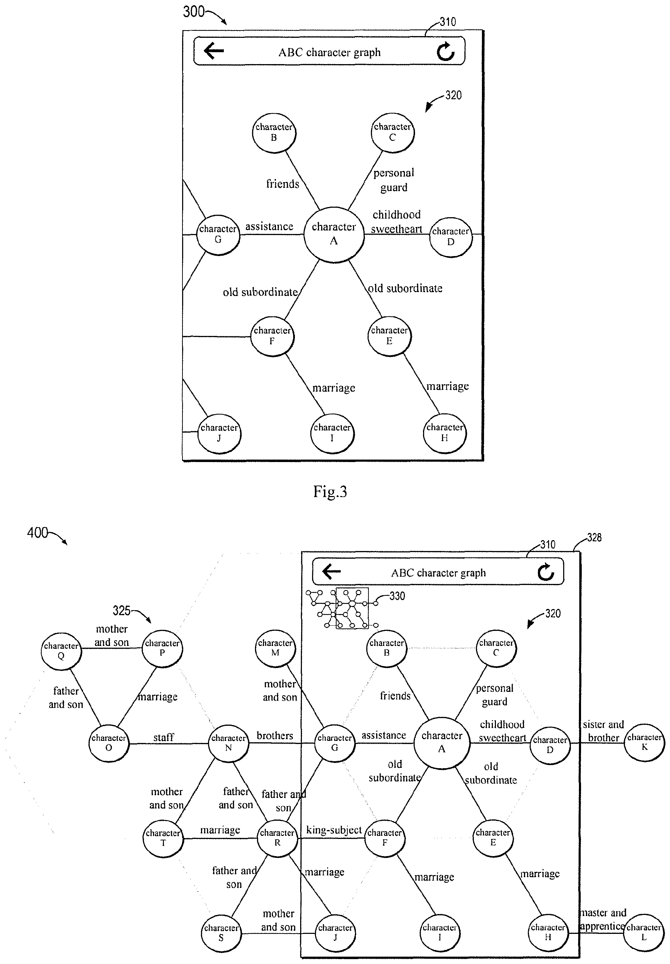

Fig 3 is a schematic diagram illustrating an example GUI (graphical user interface) 300 of a character graph generated according to an embodiment of the present disclosure.

As illustrated in Fig. 3, GUI 300 may be an interface of a browser in a mobile device of the user. The GUI 300 includes a search or address bar 310 and a knowledge graph. In this embodiment, the knowledge graph is a character graph 320. The search or address bar 310 displays a key word "ABC character graph", i.e., a character graph for a TV play ABC. In addition, a back arrow for returning to a previous page is provided on the left side of the search or address bar 310, and a refresh button for refreshing a current page is provided on the right side of the search or address bar 310.

The character graph 320 presents a part of the entire character graph for the TV play ABC. It should be understood that, the entire character graph may be presented at one time in a case of a large screen. The presented character graph 320 includes a node of character A, a node of character B, a node of character C, a node of character D, a node of character E, a node of character F, a node of character G, a node of character H, a node of character I, a node of character J. In some embodiments, the node of each character may present an avatar or an image of the character. Character A is a most key character (i.e., the hero) of the TV play ABC, thus the node of character A may be determined as the central node. The character graph 320 is presented by taking the node of character A as the center. For example, the node of character A may be enlarged to present.

Among the nodes shown in Fig. 3, a relationship between character A and character B is a friendship relationship. A relationship between character A and character C is a personal guard relationship. A relationship between character A and character F is an old subordinate relationship. A relationship between character F and character I is a marital relationship. As illustrated in Fig. 3, the character graph 320 is a honeycomb network structure, using a formatted layout in a form of hexagon. Each hexagon includes six edge nodes(such as the node of character B, the node of character C, the node of character D, the node of character E, the node of character F, the node of character G) and one central node (such as the node of character A).

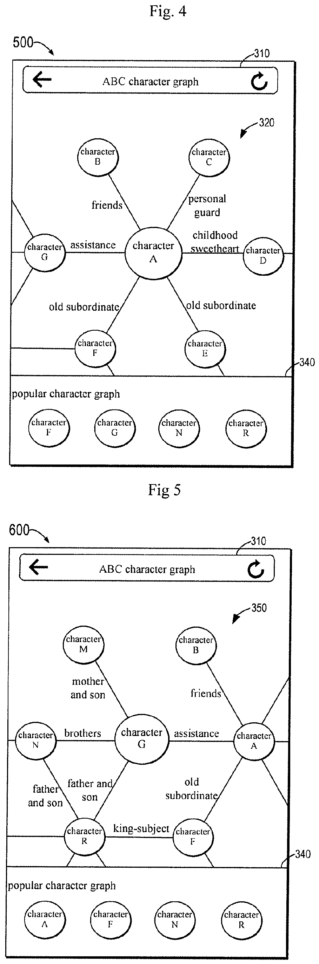

Fig 4 is a schematic diagram illustrating an example GUI 400 of an entire character graph for a certain TV play generated according to an embodiment of the present disclosure. An entire character graph 325 for TV play A is shown in Fig. 4. Due to the size of the screen, only a part (i.e., character graph 320) of the entire character graph 325 is presented on the screen 328, and nodes and edges out of the screen 328 are hidden. Although some nodes and edges are hidden, the user can view other parts of the entire character graph 325 by dragging or zooming or operating a keyboard or a mouse.

As illustrated in Fig. 4, GUI 400 further presents a thumbnail 330 of the entire character graph 325, and the currently visible character graph 320 is marked by a solid line box in the thumbnail. In this way, the user may clearly understand a global position of the currently viewed graph. In some embodiments, the thumbnail may be displayed in an upper left corner or an upper right corner of the screen 328.

Fig 5 is a schematic diagram illustrating an example GUI 500 including an area for recommending popular character graph according to an embodiment of the present disclosure. As illustrated in Fig. 5, GUI 500 may further display, e.g., at a lower side of the screen, recommendation of a set 340 of candidate central nodes. That is, a character graph may be established by taking a plurality of important characters in the TV play ABC as centers. The user may select a central node character from the area of the set 340 of candidate central nodes according to demand, and then a presentation pattern of the character graph is changed.

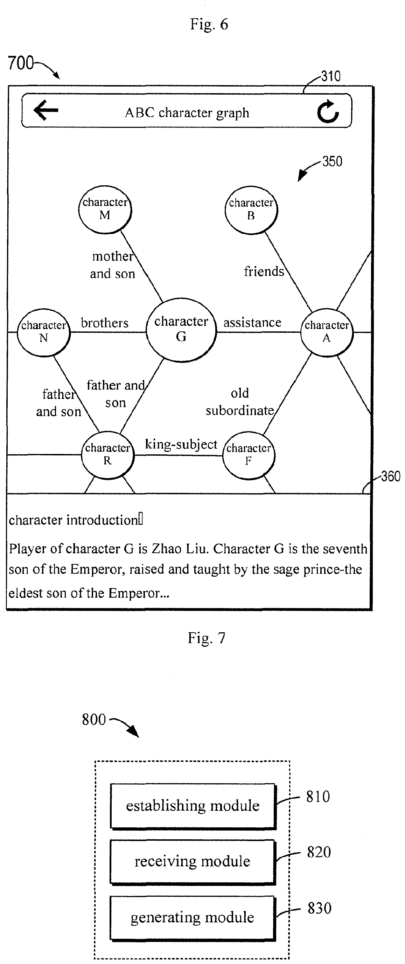

For example, as illustrated in Fig. 6, if the user selects the character G in the set 340 of candidate central nodes, a character graph 350 with a central node as character G is presented. At this time, the character G is enlarged to be displayed. Fig 6 is a schematic diagram illustrating an example GUI of a character graph with a switched central node according to an embodiment of the present disclosure. In this way, the user may select a central node character that needs to be learnt, thereby enhancing the user's experience when learning from different aspects. Therefore, by adding switching between graphs with a plurality of key characters as respective central nodes, it is possible to satisfy the user's demand to learn the relationships of characters in the TV play from multiple aspects.

Fig 7 is a schematic diagram illustrating an example GUI 700 presenting character introduction according to an embodiment of the present disclosure. In some embodiments, each node in the character graph may be clickable. After a click, the area of the set 340 of candidate central nodes may be changed to profile information of a clicked character in the TV play. For example, the profile information may be introduction of the character. For example, in the GUI 700, if the user clicks the node of character G, character profile 360 may be present on the screen. The character profile 360 includes character introduction information about character G.

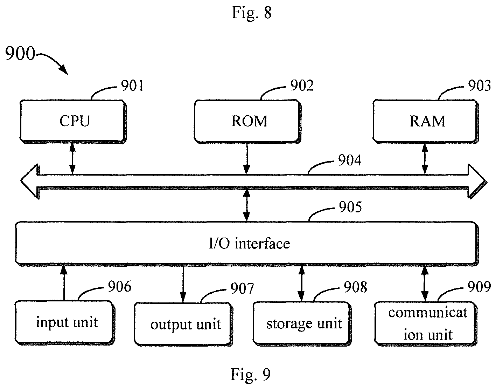

Fig. 8 is a block diagram illustrating an apparatus 800 for generating a knowledge graph according to an embodiment of the present disclosure. As illustrated in Fig. 8, the apparatus 800 includes an establishing module 810, a receiving module 820, and a generating module 830. The establishing module 810 is configured to establish a graph database based on a set of entities and relationships among the entities in given content. The receiving module 820 is configured to receive a graph query for the given content from a user. The generating module 830 is configured to generate, based on the graph database, a knowledge graph of the given content by using a predefined formatted layout, the knowledge graph having a network structure.

In some embodiments, the given content is a film and television work, the entities are characters in the film and television work, the relationships are character relationships among the characters, and the establishing module 810 includes an establishing unit. The establishing unit is configured to establish the graph database by using the characters as nodes and using the character relationship as edges.

In some embodiments, the generating module 830 includes: a determining unit configured to determine a node corresponding to a specific entity in the set of entities as a central node; and a first generating unit configured to generate the knowledge graph by taking the central node as a center.

In some embodiments, the generating module 830 further includes: a first providing unit configured to provide a set of candidate central nodes to a user interface; and an adjusting unit, configured to, in response to selecting one from the set of candidate central nodes by the user, adjust the knowledge graph by taking the selected candidate central node as the center.

In some embodiments, the apparatus 800 further includes a providing module. The providing module is configured to, in response to selecting a node from the knowledge graph by the user, provide a profile of an entity corresponding to the selected node, to replace the set of candidate central nodes in the user interface.

In some embodiments, the generating module 830 further includes: a second providing unit configured to provide a thumbnail of an entire knowledge graph corresponding to the graph database; and a marking providing unit configured to mark a portion associated with the knowledge graph in the thumbnail.

In some embodiments, the generating module 830 further includes: a second generating unit configured to generate the knowledge graph by using a honeycomb hexagon structure, the central node being a center of the hexagon.

In some embodiments, the apparatus 800 further includes: a first updating module configured to, in response to determining that the given content is updated, update the graph database; and a second updating module configured to, in response to receiving the graph query for the given content, generate an updated knowledge graph based on the updated graph database.

It should be understood that, the establishing module 810, the receiving module 820, and the generating module 830 shown in Fig. 8 may be included in an electronic device, such as a server. In addition, it should be understood that, the modules shown in Fig. 8 may implement the steps or actions in a method or a process with reference to embodiments of the present disclosure.

Fig. 9 is a schematic diagram illustrating a device 900 that may be configured to implement embodiments of the present disclosure. It should be understood that, the device 900 may be used to implement the apparatus 800 for generating a knowledge graph of the present disclosure. As illustrated in Fig. 9, the device 900 includes a central processing unit (CPU for short) 901, which can perform various appropriate actions and processes according to computer program instructions stored in a read only memory (ROM) 902 or computer program instructions loaded from a memory unit 908 into a random access memory (RAM) 903. The RAM 903 may further store various programs and data required for the operation of the device 900. The CPU 901, the ROM 902 and the RAM 903 are connected to each other through a bus 904. An input/output (I/O) interface 905 is also connected to the bus 904.

A plurality of components in device 900 are connected to the I/O interface 905. The components includes: an input unit 906, such as a keyboard, mouse, etc., an output unit 907, such as various types of displays, speakers, etc., a storage unit 908, such as a disk, an optical disk, etc., and a communication unit 909, such as a network card, a modem, a wireless communication transceiver, and the like. The communication unit 909 allows the device 900 to exchange information/data with other devices over a computer network such as the Internet and/or various telecommunication networks.

The processing unit 901 performs the various methods and processes described above, such as the method 200. For example, in some embodiments, the method may be implemented as a computer software program that is tangibly embodied in a machine readable medium, such as the storage unit 908. In some embodiments, some or all of the computer programs can be loaded and/or installed onto the device 900 via the ROM 902 and/or the communication unit 909. One or more acts or steps of the method described above may be performed when a computer program is loaded into the RAM 903 and executed by the CPU 901. Alternatively, in other embodiments, the CPU 901 may be configured to perform the method by any other suitable means (e.g., by means of firmware).

The functions described above may be performed at least in part by one or more hardware logic components. For example, and without limitation, exemplary types of hardware logic components that may be used include: a field programmable gate array (FPGA), and application specific integrated circuit (ASIC), an application specific standard product (ASSP), a system on chip (SOC), a load programmable logic device (CPLD), and the like.

Program codes for implementing the methods of the present disclosure may be written in any combination of one or more programming languages. The program codes may be provided to a processor or controller of a general-purpose computer, a special-purpose computer or other programmable data processing apparatus, such that the program codes, when executed by the processor or the controller, enable the functions specified in the flow charts and/or block diagrams to be implemented. The program codes may be entirely executed on a machine, partially executed on the machine, partially executed on the machine as a stand-alone software package and partially executed on a remote machine, or entirely executed on the remote machine or a server.

In the context of the present disclosure, a machine-readable medium can be a tangible medium that can contain or store a program for use by or in connection with an instruction execution system, apparatus, or device. The machine readable medium can be a machine readable signal medium or a machine readable storage medium. The machine-readable medium may include, but is not limited to, an electronic, magnetic, optical, electromagnetic, infrared, or semiconductor system, apparatus, or device, or any suitable combination of the foregoing. More specific examples of the machine readable storage media may include electrical connections based on one or more wires, a portable computer disk, a hard disk, a random access memory (RAM), a read-only memory (ROM), an erasable programmable read-only memory (EPROM or flash memory), an optical fiber device, a portable compact disk read-only memory (CD-ROM), an optical storage device, a magnetic storage device, or any suitable combination of the foregoing.

In addition, although the acts or steps are described in a particular order, this should be understood that such acts or steps are required to be performed in the particular order or in the sequence shown, or all illustrated acts or steps should be executed to achieve a desired result. Multitasking and parallel processing may be advantageous in certain circumstances. Likewise, although several specific implementation details are included in the above description, these should not be construed as limiting the scope of the present disclosure. Certain features that are described in the context of separate embodiments can also be implemented in combination in a single implementation. Instead, various features that are described in the context of a single implementation can be implemented in a plurality of implementations, either individually or in any suitable sub-combination.

Although the embodiments of the present disclosure have been described in terms of specific structural features and/or methodological acts, it is understood that the subject matters defined in the appended claims are not limited to the specific features or acts described above. Instead, the specific features and acts described above are merely exemplary forms of implementing the claims.

## Claims

1. A method (200) for generating a knowledge graph, comprising:
establishing (202) a graph database based on a set of entities and relationships among the entities in given content;
receiving (204) a graph query for the given content from a user; and
generating (206), based on the graph database, a knowledge graph of the given content by using a predefined formatted layout, the knowledge graph having a network structure.

2. The method (200) of claim 1, wherein the given content is a film and television work, the entities are characters in the film and television work, the relationships are character relationships among the characters, and establishing (202) the graph database comprises:
establishing the graph database by using the characters as nodes and using the character relationships as edges.

3. The method (200) of claim 1 or 2, wherein generating (206) the knowledge graph comprises:
determining a node corresponding to a specific entity in the set of entities as a central node; and
generating the knowledge graph by taking the central node as a center.

4. The method (200) of claim 3, wherein generating (206) the knowledge graph further comprises:
providing a set of candidate central nodes to a user interface; and
in response to selecting one from the set of candidate central nodes by the user, adjusting the knowledge graph by taking the selected candidate central node as the center.

5. The method (200) of claim 4, further comprising:
in response to selecting a node from the knowledge graph by the user, providing a profile of an entity corresponding to the selected node, to replace the set of candidate central nodes in the user interface.

6. The method (200) of any one of claims 3 to 5, wherein generating (206) the knowledge graph further comprises:
providing a thumbnail of an entire knowledge graph corresponding to the graph database; and
marking a portion associated with the knowledge graph in the thumbnail.

7. The method (200) of any one of claims 1 to 6, wherein generating (206) the knowledge graph comprises:
generating the knowledge graph by using a honeycomb hexagon structure, the central node being a center of the hexagon.

8. The method (200) of any one of claims 1 to 7, further comprising:
in response to determining that the given content is updated, updating the graph database; and
in response to receiving the graph query for the given content, generating an updated knowledge graph based on the updated graph database.

9. An apparatus (800) for generating a knowledge graph, comprising:
an establishing module (810), configured to establish a graph database based on a set of entities and relationships among the entities in given content;
a receiving module (820), configured to receive a graph query for the given content from a user; and
a generating module (830), configured to generate, based on the graph database, a knowledge graph of the given content by using a predefined formatted layout, the knowledge graph having a network structure.

10. The apparatus (800) of claim 9, wherein the given content is a film and television work, the entities are characters in the film and television work, the relationships are character relationships among the characters, and the establishing module (810) comprises:
an establishing unit, configured to establish the graph database by using the characters as nodes and using the character relationship as edges.

11. The apparatus (800) of claim 9 or 10, wherein the generating (830) module comprises:
a determining unit, configured to determine a node corresponding to a specific entity in the set of entities as a central node; and
a first generating unit, configured to generate the knowledge graph by taking the central node as a center.

12. The apparatus (800) of claim 11, wherein the generating (830) module further comprises:
a first providing unit, configured to provide a set of candidate central nodes to a user interface; and
an adjusting unit, configured to, in response to selecting one from the set of candidate central nodes by the user, adjust the knowledge graph by taking the selected candidate central node as the center.

13. The apparatus (800) of claim 12, further comprising:
a providing module, configured to, in response to selecting a node from the knowledge graph by the user, provide a profile of an entity corresponding to the selected node, to replace the set of candidate central nodes in the user interface.

14. The apparatus (800) of one of claims 11 to 13, wherein the generating (830) module further comprises:
a second providing unit, configured to provide a thumbnail of an entire knowledge graph corresponding to the graph database; and
a marking providing unit, configured to mark a portion associated with the knowledge graph in the thumbnail.

15. A computer readable storage medium, having computer programs stored thereon that, when executed by a processor, cause the processor to perform the method according to any one of claims 1 to 8 to be performed.
